# EUROPEAN PATENT APPLICATION

(11) **EP 4 745 189 A1**
(43) Date of publication of application: **20.05.2026**
(21) Application number: 25814897.2
(22) Date of filing: 21.05.2025
(51) Int. Cl.: C08L 9/06, C08L 9/00, C08K 5/09, C08K 5/47, C08K 7/26, B60C 1/00

(54) **VULCANIZATION AID AND PREPARATION METHOD THEREFOR, RUBBER COMPOSITION, RUBBER PRODUCT AND TIRE**

(30) Priority: 30.05.2024 CN 202410692439; 30.05.2024 CN 202410693454
(71) Applicant: Eve Rubber Institute Co., Ltd., Qingdao, Shandong 266045 (CN); Sailun Group Co., Ltd., Qingdao, Shandong 266000 (CN)
(72) Inventor: WANG, Bin, Qingdao, Shandong 266045 (CN); JIA, Weijie, Qingdao, Shandong 266045 (CN); XU, Zhaolai, Qingdao, Shandong 266045 (CN); ZHAO, Lina, Qingdao, Shandong 266045 (CN); LIU, Feng, Qingdao, Shandong 266045 (CN)
(74) Representative: Novagraaf Technologies
(86) International application number: PCT/CN2025/096368
(87) International publication number: WO 2025/247050

(57) **Abstract**

Provided are a vulcanizing auxiliary agent and a preparation method thereof, and a rubber composition, a rubber product, and a tire. The preparation method includes: pre-reacting an anti-aging agent and a vulcanizing system agent under the action of a catalyst, where the catalyst includes stearic acid. Under the catalytic action of the stearic acid, the anti-aging agent reacts with a reagent in a vulcanizing system to generate an active intermediate. The active intermediate has an effect of promoting vulcanization and plays a role in activating a promoting agent in advance, such that the active intermediate may replace zinc oxide to prepare rubber products such as tires completely free of zinc elements, can realize zinc-free discharge, and thus is environmentally friendly.

## Description

This invention claims priority to Chinese Patent Application No. 2024106924399 filed on May 30, 2024 and Chinese Patent Application No. 2024106934545 filed on May 30, 2024, the inventions of which are hereby incorporated by reference in their entireties.

### Technical Field

The present invention relates to the technical field of preparation of tread rubber, and specifically to a vulcanizing auxiliary agent and a preparation method thereof, and a rubber composition, a rubber product, and a tire.

### Background

The presence of zinc in tire treads poses environmental pollution risks. Both the European Commission's Directive 2400/73/EC and California's 2016 SB1260 bill recommend restricting the use of zinc or zinc oxide in tires.

However, zinc oxide or zinc-based auxiliary agents function as vulcanizing active agents during vulcanization, enhancing crosslink density to increase rubber material hardness and ensure rubber material performance. Tires manufactured with these materials deliver guaranteed rolling resistance and traction. Removing zinc from conventional formulas often results in reduced crosslinking levels under existing production processes, leading to reduced mechanical properties, low hardness, increased hysteresis, elevated rolling resistance, and reduced traction. Generally, diene rubber compositions require a minimum zinc oxide content of at least 2 *phr* (weight parts per hundred parts of rubber). Existing rubber compositions without zinc show low mechanical properties, reduced hardness, and significantly-reduced traction and abrasion resistance when processed through conventional tire rubber manufacturing techniques.

Researchers both domestically and internationally have initiated studies on environmental concerns related to zinc in tread rubber. Patent Application with Publication No. of CN115678038B discloses a method for replacing zinc oxide with a lignin-zinc salt composite. The purpose of reducing the usage of the zinc oxide is achieved due to its excellent dispersibility. When the method is applied to tread rubber, the wear resistance of tires may be ensured, the rolling resistance of the tires may be reduced, and the service life of the tires may be prolonged. This patent achieves the purpose of reducing zinc usage by improving zinc dispersion, but it cannot completely eliminate the environmental hazards posed by zinc. Patent CN102300917B discloses a rubber composition containing no zinc or less than 0.5 *phr* of zinc and an application thereof in tire manufacturing. Through the application of capped mercaptosilane, the processability of the zinc-free rubber compound (i.e., reducing viscosity and prolonging scorch time) is improved. Although the patent may reduce zinc usage or even do not contain zinc, it requires specific capped mercaptosilane. During high-temperature mixing, sulfhydryl may be further generated through reaction, showing irritating properties and unpleasant odors, thus posing potential safety concerns.

How to improve the performance of tread rubber without using zinc has significant social and economic values.

### Summary

The present invention is mainly intended to provide a vulcanizing auxiliary agent and a preparation method thereof, and a rubber composition, a rubber product, and a tire, so as to solve the problem of environmental pollution due to zinc in tread rubber in the related art.

In order to implement the above objective, according to an aspect of the present invention, a method for preparing a masterbatch-type vulcanizing auxiliary agent is provided. The preparation method includes: an anti-aging agent and a vulcanizing system agent are pre-reacted under the action of a catalyst, where the catalyst includes stearic acid.

Further, the above preparation method includes: at S1, the catalyst, the anti-aging agent, and the vulcanizing system are pre-reacted to obtain a pre-reaction mixture, where the catalyst is the stearic acid; and at S2, the pre-reaction mixture and rubber are mixed to obtain a vulcanizing auxiliary agent.

Further, the above preparation method includes: catalyst, the anti-aging agent, and the vulcanizing system agent are pre-reacted in a solvent, where the catalyst is zinc oxide and stearic acid; and zinc removal through filtration and solvent removal are sequentially performed after pre-reaction, so as to obtain the vulcanizing auxiliary agent.

Further, a reaction temperature of pre-reaction is 100-190 °C, and a reaction time is 1 min-120 min.

Preferably, the reaction temperature of pre-reaction is 110-170 °C, and the reaction time is 5 min-50 min.

Further, pre-reaction is performed in the solvent, and preferably, the solvent is any one or more of butanol, octanol, N-methyl-2-pyrrolidone, octane, nonane, decane, toluene, and xylene.

Further, the anti-aging agent is a phenylenediamine anti-aging agent, and preferably, the anti-aging agent has a structure shown in Formula I.

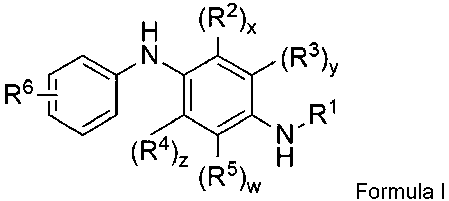

In the Formula I, R¹ is selected from C₁-C₁₈ chain hydrocarbyl, C₃-C₁₈ alicyclic hydrocarbyl, or C₆-C₁₈ aryl, R², R³, R⁴, and R⁵ are each independently selected from the C₁-C₁₈ chain hydrocarbyl, R² and R³ or R⁴ and R⁵ are able to respectively or simultaneously constitute an alicyclic ring, and R⁶ is selected from H, the C₁-C₁₈ chain hydrocarbyl, the C₃-C₁₈ alicyclic hydrocarbyl, or the C₆-C₁₈ aryl, wherein x=0 or 1, y=0 or 1, z=0 or 1, w=0 or 1, at least one of x and w is 1, and at least one of y and z is 1.

Further, the vulcanizing system agent includes any one or more of a vulcanizing agent and a promoting agent, the vulcanizing agent includes any one or more of sulfur and a sulfur carrier, the promoting agent includes any one or more of a sulfenamide promoting agent and a thiazole promoting agent, and preferably, the promoting agent includes any one or more of CZ, DCBS, MBTS, MBT, and TBBS.

Further, a weight ratio of the stearic acid to the anti-aging agent is 1:1-1:1.25; a weight ratio of the vulcanizing system to the anti-aging agent is 0.8:1-1.15:1.

Further, S2 includes the solvent in the pre-reaction mixture is removed, and then the pre-reaction mixture is mixed with the rubber to obtain a masterbatch-type vulcanizing auxiliary agent; or S2 includes the pre-reaction mixture containing the solvent is mixed with the rubber, and then the solvent is removed to obtain the masterbatch-type vulcanizing auxiliary agent.

Further, 10-20 *phr* of the zinc oxide, 5-15 *phr* of the stearic acid, 5-15 *phr* of the anti-aging agent, and 5-15 *phr* of the vulcanizing system agent are added during pre-reaction.

Further, the vulcanizing auxiliary agent further includes 50-150 *phr* of the rubber; a method for preparing the vulcanizing auxiliary agent containing the rubber further includes first mixing or second mixing; the first mixing includes: filtrate obtained after zinc removal through filtration is mixed with the rubber, and then solvent removal is performed; and the second mixing includes: the solvent in the filtrate obtained after zinc removal through filtration is removed, and then the filtrate is mixed with the rubber.

Further, the rubber includes any one or more of a natural polymer or a synthetic polymer; preferably, the rubber is selected from any one or more of natural rubber, styrene butadiene rubber, isoprene rubber, natural eucommia ulmoides gum, polyisoprene rubber, butadiene rubber, halogenated butyl rubber, and ethylene-propylene-diene monomer rubber; preferably, a molecular weight of the rubber is 1000 to 40 million, further preferably 5000 to 30 million, and more preferably 10000-8 million.

Preferably, the rubber includes diene rubber having a structure shown in Formula II. 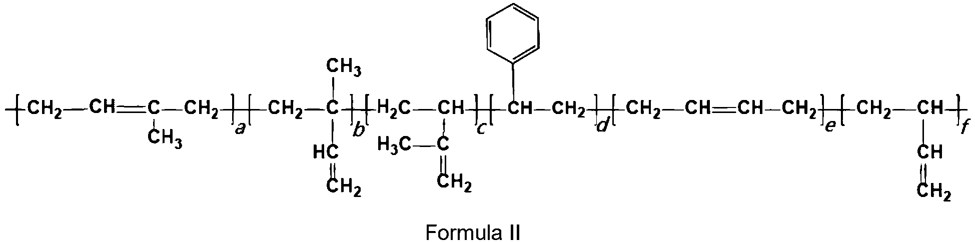 a, b, c, d, e, and f are each independent integers greater than or equal to 0, and a, b, c, d, e, and f are not 0 at the same time.

In order to implement the above objective, according to an aspect of the present invention, a vulcanizing auxiliary agent is provided. The vulcanizing auxiliary agent is prepared by any one of the above preparation methods.

According to another aspect of the present invention, a rubber composition is provided, and is based on weight by parts,
Further, the filler includes any one or more of a carbon-based filler, a silicon-based filler, a carbon-silicon biphasic filler, and clay; preferably, a specific surface area of the filler is 10-500 m²/g, further preferably 30-300 m²/g, and more preferably 50-300 m²/g.

Preferably, the rubber composition further includes other auxiliary agents, and other auxiliary agents include any one or more of resin, operating oil, a vulcanizing agent, and a silane coupling agent.

Preferably, the rubber composition includes, by weight, 100 *phr* of the elastomer, 20 *phr-170 phr* of the filler, 10-50 *phr* of the zinc-free vulcanizing auxiliary agent, and other auxiliary agents; or the rubber composition includes 0-130 parts of the elastomer, 25-35 parts of the masterbatch-type vulcanizing auxiliary agent, 20-170 parts of the filler, and 1-5 parts of other auxiliary agents; and more preferably, the rubber composition includes 30-100 parts of the elastomer, 26-31 parts of the masterbatch-type vulcanizing auxiliary agent, 50-130 parts of the filler, and 1.4-4.5 parts of other auxiliary agents.

According to a beneficial aspect of the present invention, a rubber product is provided. The rubber product is prepared by any one of the above rubber compositions.

According to yet another aspect of the present invention, a tire is provided. The tire includes the above rubber product.

By using the technical solution of the present invention, under the action of the catalyst, the anti-aging agent reacts with a reagent in a vulcanizing system to generate an active intermediate. The active intermediate has an effect of promoting vulcanization and plays a role in activating a promoting agent in advance, such that the active intermediate may replace zinc oxide to prepare rubber products such as tires completely free of zinc elements, can realize zinc-free discharge, and thus is environmentally friendly. Moreover, the vulcanizing auxiliary agent prepared by the above preparation method can cause the rubber composition containing same to obtain, without zinc, crosslinking density close to the zinc-containing rubber composition, as well as rubber material performance such as hardness, stress at definite elongation, hysteresis, etc.

### Detailed Description of the Embodiments

It is to be noted that the embodiments in the present invention and the features in the embodiments may be combined with one another without conflict. The present invention will be described below in detail with reference to the embodiments.

As analyzed in the Background of the present invention, there is the problem of environmental pollution due to zinc in tread rubber in the related art. The method in the related art can only reduce the content of zinc in rubber and cannot completely avoid an environmental impact caused by the zinc. However, rubber without zinc struggles to meet the use requirements for tread rubber. In order to solve the problem, the present invention provides a vulcanizing auxiliary agent and a preparation method thereof, and a rubber composition, a rubber product, and a tire.

According to a typical implementation of the present invention, a method for preparing a vulcanizing auxiliary agent is provided. The preparation method includes: an anti-aging agent and a vulcanizing system agent are pre-reacted under the action of a catalyst, where the catalyst includes stearic acid.

In the above preparation method, under the action of the catalyst, the anti-aging agent reacts with a reagent in a vulcanizing system to generate an active intermediate. The active intermediate has an effect of promoting vulcanization and plays a role in activating a promoting agent in advance, such that the active intermediate may replace zinc oxide to prepare rubber products such as tires completely free of zinc elements, can realize zinc-free discharge, and thus is environmentally friendly. Moreover, the vulcanizing auxiliary agent prepared by the above preparation method can cause the rubber composition containing same to obtain, without zinc, crosslinking density close to the zinc-containing rubber composition, as well as rubber material performance such as hardness, stress at definite elongation, hysteresis, etc.

In some embodiments of the present invention, the above preparation method includes: at S1, the stearic acid, the anti-aging agent, and the vulcanizing system are pre-reacted to obtain a pre-reaction mixture; and at S2, the pre-reaction mixture and rubber are mixed to obtain a vulcanizing auxiliary agent. The masterbatch-type vulcanizing auxiliary agent does not contain zinc. Since the vulcanizing auxiliary agent contains an active intermediate that may replace the function of zinc oxide, the masterbatch-type vulcanizing auxiliary agent may be used to prepare rubber products such as tires that are entirely free of zinc.

There are no specific requirements for the rubber content in the masterbatch-type vulcanizing auxiliary agent. In some embodiments of the present invention, for ease of subsequent use, in the masterbatch-type vulcanizing auxiliary agent, a content of the rubber is 50-95wt%.

In some embodiments of the present invention, the pre-reaction mixture containing the solvent is first subjected to solvent removal and then mixed with the rubber. That is, S2 includes: the solvent in the pre-reaction mixture is removed, and then the pre-reaction mixture is mixed with the rubber to obtain the masterbatch-type vulcanizing auxiliary agent.

In some embodiments of the present invention, the pre-reaction mixture containing the solvent is mixed with the rubber, and then the solvent is removed. That is, S2 includes mixing the pre-reaction mixture containing the solvent with the rubber, and then removing the solvent to obtain the masterbatch-type vulcanizing auxiliary agent.

In some typical embodiments of the present invention, in order to better achieve the catalytic action of the stearic acid, a weight ratio of the stearic acid to the anti-aging agent is 1:1-1:1.25; and preferably, a weight ratio of the vulcanizing system to the anti-aging agent is 0.8:1-1.15:1, and the activity of the generated product is higher.

In some embodiments of the present invention, the above method for preparing a vulcanizing auxiliary agent includes: catalyst, the anti-aging agent, and the vulcanizing system agent are pre-reacted in a solvent, where the catalyst is zinc oxide and stearic acid; and zinc removal through filtration and solvent removal are sequentially performed after pre-reaction, so as to obtain the vulcanizing auxiliary agent. In the preparation method, the zinc oxide and the stearic acid are simultaneously used as the catalyst for pre-reaction, and zinc removal through filtration is performed after the reaction is completed. The anti-aging agent and the vulcanizing system agent may generate the active intermediate more efficiently during pre-reaction, and the prepared vulcanizing auxiliary agent also does not contain zinc and achieves functions in the formula by replacing the zinc oxide.

The proportions of the zinc oxide, stearic acid, anti-aging agent, and the vulcanizing system agent added during pre-reaction may be set according to proportions among corresponding components in an existing formula. In some typical embodiments of the present invention, 10-20 *phr* of the zinc oxide, 5-15 *phr* of the stearic acid, 5-15 *phr* of the anti-aging agent, and 5-15 *phr* of the vulcanizing system agent are added during pre-reaction. The prepared zinc-free vulcanizing auxiliary agent has a more significant effect in enhancing the crosslinking density and rubber material performance of the composition. In some typical embodiments of the present invention, the vulcanizing auxiliary agent further includes 50-150 *phr* of the rubber; a method for preparing the vulcanizing auxiliary agent containing the rubber further includes first mixing or second mixing; the first mixing includes: filtrate obtained after zinc removal through filtration is mixed with the rubber, and then solvent removal is performed; and the second mixing includes: the solvent in the filtrate obtained after zinc removal through filtration is removed, and then the filtrate is mixed with the rubber. The vulcanizing auxiliary agent containing the rubber is a masterbatch-type auxiliary agent. Since dispersion has already been achieved in the rubber, subsequent applications have better effects, such that the active intermediate generated by the anti-aging agent and the vulcanizing system agent during pre-reaction achieves the effect of enhancing the crosslinking density and the rubber material performance. In particular, through the above first mixing, the filtrate obtained after zinc removal through filtration may be well mixed with the rubber by a simple method, such as stirring, and the mixing of the rubber and other components is fuller and uniform. In the above second mixing, the filtered zinc-removed product after solvent removal and the rubber may be mixed in a manner in the related art, such as mixing.

In an example of a phenylenediamine anti-aging agent and a 2-thiobenzothiazole vulcanizing system agent, the reaction during pre-reaction is shown in the following reaction equation, and the product has the effect of promoting a vulcanization reaction.

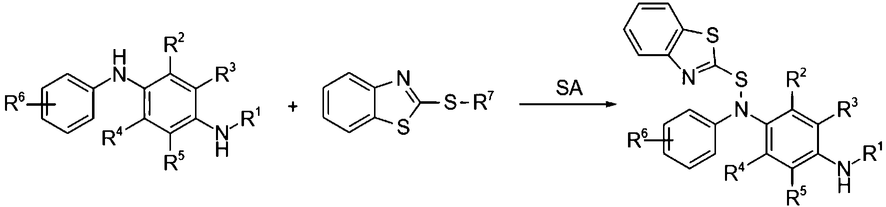

In some embodiments of the present invention, in order to promote the efficient proceeding of pre-reaction, a reaction temperature of pre-reaction is 100-190 °C, and a reaction time is 1 min-120 min. In order to further improve the activity of the intermediate, preferably, the reaction temperature of pre-reaction is 110-170 °C, such as 120 °C, 130 °C, 140 °C, 150 °C, 160 °C, or 170 °C, and the pre-reaction effect is better. Preferably, the reaction time of pre-reaction is 5 min-50 min, such as 10 min, 15 min, 20 min, 25 min, 30 min, 35 min, 40 min, 45 min, or 50 min.

In some typical embodiments of the present invention, in order to cause the components participating in pre-reactions to be uniformly dispersed and accelerate the speed and conversion efficiency of the reaction, the pre-reaction is performed in the solvent. When the catalyst contains the zinc oxide, for ease of separation of the zinc oxide and in order to improve the efficiency of pre-reaction, the pre-reaction is performed in the solvent. The solvent in pre-reaction can dissolve the stearic acid, anti-aging agent, and vulcanizing system agent participating in pre-reaction, does not dissolve the zinc oxide, has no adverse effects on the reaction of the anti-aging agent and vulcanizing system agent, and may be selected in the related art. The amount of the solvent added may be regulated according to the solubility of the solvent to raw materials of the above pre-reaction. Preferably, the solvent is any one or more of butanol, octanol, N-methyl-2-pyrrolidone, octane, nonane, decane, toluene, and xylene, which not only has good solubility to various components participating in the reaction, but also facilitates the promotion of the pre-reaction.

The method for removing the solvent added during pre-reaction may be selected in the related art, and is not limited in the present invention, such as a distillation method, and the removed solvent may be recycled.

The above anti-aging agent may be selected in the related art. Preferably, the anti-aging agent is a phenylenediamine anti-aging agent. In some embodiments of the present invention, the anti-aging agent in the above pre-reaction is the phenylenediamine anti-aging agent, for example, one or more of 4020(6PPD), 4010NA(IPPD), and 7PPD.

In some preferred embodiments -of the present invention, the anti-aging agent has a structure shown in Formula I. The anti-aging agent having the structure forms the active intermediate after reacting with the vulcanizing system, is high in activity, small in toxicity, and friendly to environment.

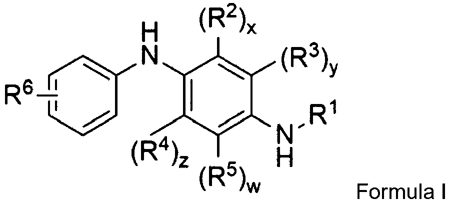

In the Formula I, R¹ is selected from C₁-C₁₈ chain hydrocarbyl, C₃-C₁₈ alicyclic hydrocarbyl, or C₆-C₁₈ aryl, R², R³, R⁴, and R⁵ are each independently selected from the C₁-C₁₈ chain hydrocarbyl, R² and R³ or R⁴ and R⁵ are able to respectively or simultaneously constitute an alicyclic ring, and R⁶ is selected from H, the C₁-C₁₈ chain hydrocarbyl, the C₃-C₁₈ alicyclic hydrocarbyl, or the C₆-C₁₈ aryl, wherein x=0 or 1, y=0 or 1, z=0 or 1, w=0 or 1, at least one of x and w is 1, and at least one of y and z is 1.

In some embodiments of the present invention, the vulcanizing system agent added during pre-reaction includes any one or more of a vulcanizing agent and a promoting agent, the vulcanizing agent includes any one or more of sulfur and a sulfur carrier, the promoting agent includes any one or more of a sulfenamide promoting agent and a thiazole promoting agent, and preferably, the promoting agent includes any one or more of CZ, DCBS, MBTS, MBT, and TBBS. In some other embodiments of the present invention, the vulcanizing system agent added during pre-reaction is any one or more of the promoting agents, and the vulcanizing agent is added during the preparation of a rubber product.

The above rubber may be selected in the related art, such as a natural polymer or a synthetic polymer. For example, the above natural rubber includes, but is not limited to, natural gum, eucommia ulmoides gum, guayule gum, etc.; and the synthetic polymer includes, but is not limited to, those obtained by polymerizing monomers in solutions (i.e., solution-polymerized rubber), those obtained by polymerizing the monomers in emulsion (i.e., emulsion-polymerized rubber), and those obtained by polymerizing the monomers. The solution-polymerized rubber is a homopolymer or copolymer of ethylene, propylene, butylene, pentene, hexene, heptene, diene monomers with 4-7 carbon atoms, triene monomers with 6-7 carbon atoms, or olefin monomers containing other atoms or functional groups. Other atoms or functional groups include silicon atoms, fluorine atoms, chlorine atoms, nitrogen atoms, oxygen atoms, sulfur atoms, ester groups, amino ester groups, and cyano groups, the homopolymer and copolymer containing the above monomers are also included, The synthetic polymer includes, but are not limited to, polybutadiene, polyisoprene, styrene butadiene rubber, ethylene propylene rubber, butyl rubber, butadiene-acrylonitrile rubber, neoprene adhesive, silicone rubber, fluororubber, polyurethane rubber, chlorosulfonated polyethylene rubber, acrylic rubber, etc.

In some embodiments of the present invention, the above rubber is any one or more of natural rubber, styrene butadiene rubber, isoprene rubber, natural eucommia ulmoides gum, polyisoprene rubber, butadiene rubber, halogenated butyl rubber, and ethylene-propylene-diene monomer rubber, which is better in comprehensive performance.

In some embodiments of the present invention, the rubber in the above vulcanizing auxiliary agent is preferably diene rubber. Preferably, the structure of the diene rubber includes a branch and/or lateral group, and the branch and/or lateral group contains a vinyl double bond and/or aryl group.

The zinc oxide and the stearic acid added during pre-reaction may be selected in the related art, and are not specifically required in the present invention.

In some preferred embodiments of the present invention, the above rubber is rubber including Formula II, can better achieve a synergistic effect with the pre-reaction mixture, and significantly improve the comprehensive effect of the masterbatch-type vulcanizing auxiliary agent. Preferably, the above rubber including Formula **II** accounts for more than 35 wt% of the total rubber amount of the masterbatch-type vulcanizing auxiliary agent, preferably 60 wt%-100 wt%.

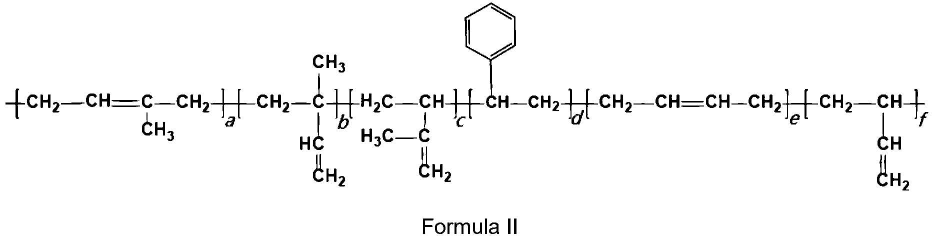

In Formula II, a, b, c, d, e, and f are each independent integers greater than or equal to 0, and a, b, c, d, e, and f are not 0 at the same time.

Preferably, at least two of a, b, c, d, e, and f are not 0. Repeating units therein are distributed irregularly.

In some preferred embodiments of the present invention, for the rubber having the structure shown in the chemical formula II, a, b, and c are 0, and d, e, and f are not 0; or a, b, and c are not 0, and d, e, and f are 0; or a, b, c, and d are 0, and e and f are not 0. The diene rubber having the structure has higher crosslinking density.

Further, the sum of the numbers of the vinyl double bonds and aryl groups on the lateral group and branch of the rubber shown in Formula II accounts for more than 15% of the sum of the numbers of the vinyl double bonds and aryl groups of the rubber, such as 20%, 25%, 30%, 35%, 40%, 45%, 50%, 55%, 60%, 65%, 70%, 75%, 80%, 90%, or a range between any two of the above. Those skilled in the art can understand that, the Formula II structure may only include the lateral group or the branch, the lateral group or the branch may only include the vinyl double bond or aryl group, and the number of the vinyl double bonds or aryl groups on the lateral group or the branch accounts for more than 15% of the sum of the number of all the vinyl double bonds and aryl groups in the rubber molecular structure.

In order to further improve the performance of the masterbatch-type vulcanizing auxiliary agent, preferably, a molecular weight of the rubber is 1000 to 40 million, more preferably 5000 to 30 million, and further preferably 10000-4 million.

Further, the rubber having the structure shown in Formula II has a weight more than 35% by weight of the diene rubber, and preferably more than 60% by weight of the diene rubber. For example, the weight content of the rubber having the structure shown in Formula II in the diene rubber is 65%, 70%, 75%, 80%, 85%, 90%, 95%, or 100%.

The stearic acid used in S1 may be selected in the related art, which is not specifically required in the present invention, and thus is not described herein again.

According to another typical implementation of the present invention, a vulcanizing auxiliary agent is provided. The vulcanizing auxiliary agent is prepared by any one of the above preparation methods.

In the vulcanizing auxiliary agent prepared by the above method, under the catalytic action of the stearic acid, the anti-aging agent reacts with a reagent in a vulcanizing system to generate an active intermediate. The active intermediate has an effect of promoting vulcanization and plays a role in activating a promoting agent in advance, such that the active intermediate may replace zinc oxide to prepare rubber products such as tires completely free of zinc elements, can realize zinc-free discharge, and thus is environmentally friendly. Moreover, the vulcanizing auxiliary agent can cause the rubber composition containing same to obtain, without zinc, crosslinking density close to the zinc-containing rubber composition, as well as rubber material performance such as hardness, stress at definite elongation, hysteresis, etc.

According to another typical implementation of the present invention, a rubber composition is provided. The rubber composition includes an elastomer, a filler, and a zinc-free vulcanizing auxiliary agent. The zinc-free vulcanizing auxiliary agent is any one of the above vulcanizing auxiliary agent.

By using the above zinc-free vulcanizing auxiliary agent, the rubber composition of the present invention may be used to prepare rubber products such as tires completely free of zinc elements, can realize zinc-free discharge, and thus is environmentally friendly. Moreover, the vulcanizing auxiliary agent can cause the rubber composition containing same to obtain, without zinc, crosslinking density close to the zinc-containing rubber composition, as well as rubber material performance such as hardness, stress at definite elongation, hysteresis, etc.

The above elastomer may be selected in the related art, or be selected according to the same method of the rubber in the masterbatch-type vulcanizing auxiliary agent, and may have a type same or different from the type of the rubber in the masterbatch-type vulcanizing auxiliary agent.

The rubber composition of the present invention is good in adaptability to the filler, and the filler may be selected from fillers in the related art. For example, the filler includes any one or more of a carbon-based filler, a silicon-based filler, a carbon-silicon biphasic filler, and clay; preferably, a specific surface area of the filler is 10-500 m²/g, further preferably 30-300 m²/g, and more preferably 50-300 m²/g.

Those skilled in the art may select other auxiliary agents with corresponding functions according to the specific application environment and requirement of the rubber. Exemplarily, other auxiliary agents include any one or more of resin, operating oil, a vulcanizing agent, and a silane coupling agent. The types of these auxiliary agents may be selected in the related art, which is not specifically required in the present invention, and thus are not described herein again.

In some embodiments of the present invention, by weight, the rubber composition includes 0-100 parts of the elastomer, 25-35 parts of the zinc-free vulcanizing auxiliary agent, 20-170 parts of the filler, and 1-5 parts of other auxiliary agents. The zinc-free vulcanizing auxiliary agent is the above masterbatch-type zinc-free vulcanizing auxiliary agent.

In some embodiments of the present invention, in order to better achieve the synergistic effect of each component, by weight, the above rubber composition includes 30-100 parts of the elastomer, 26-31 parts of the zinc-free vulcanizing auxiliary agent, 50-130 parts of the filler, and 1.4-4.5 parts of other auxiliary agents. The vulcanizing auxiliary agent is the above masterbatch-type vulcanizing auxiliary agent.

In some typical embodiments of the present invention, in order to better achieve the synergistic effect of each component, the rubber composition includes 100 *phr* of the elastomer, 20 *phr-170 phr* of the filler, and 10-50 *phr* of the zinc-free vulcanizing auxiliary agent. Preferably, the rubber composition includes 100 *phr* of the elastomer, 50 *phr-130 phr* of the filler, and 20-35 *phr* of the zinc-free vulcanizing auxiliary agent. Preferably, the rubber composition further includes 3-30 parts of other auxiliary agents, and other auxiliary agents are selected from any one or more of resin, operating oil, a vulcanizing agent, and a silane coupling agent. The rubber composition of the present invention may include the vulcanizing agent. The vulcanizing agent may be used as one of the vulcanizing system agents and added to the pre-reaction for preparing the zinc-free vulcanizing auxiliary agent, or may also be separately included in the rubber composition.

According to a typical implementation of the present invention, a rubber product is provided. The rubber product is prepared by any one of the above rubber compositions. By using the above masterbatch-type vulcanizing auxiliary agent, the rubber product can realize zinc-free discharge, and thus is environmentally friendly. Moreover, the rubber product obtains, without zinc, crosslinking density close to the zinc-containing rubber product, as well as rubber material performance such as hardness, stress at definite elongation, hysteresis, etc.

The method for preparing the rubber using the above rubber composition may be selected in the related art, and the present invention is not limited thereto. For example, the following method may be used to prepare the rubber product by using the above rubber composition as a raw material: (a) the elastomer, the filler, the zinc-free masterbatch-type vulcanizing auxiliary agent, and other functional auxiliary agents are mixed in one or more stages by means of kneading, a mixing temperature reaches 125 °C-200 °C for rubber discharge, serving as a first stage masterbatch; (b) one or more thermal mechanical kneading is performed on the first stage masterbatch, a kneading temperature of 125 °C-180 °C is maintained, and rubber discharge is performed for 0-1200 s, serving as a second stage masterbatch; and any remaining processing auxiliary agents, fillers, and anti-aging agents are added all at once or in batches during this stage; (3) the second stage masterbatch and the vulcanizing system are mixed together in an internal mixer, the mixing temperature is ≤120 °C, and rubber discharge is performed to obtain final rubber; and (4) the final rubber is vulcanized on a flat vulcanizing press, so as to obtain vulcanized rubber.

In some embodiments of the present invention, the vulcanizing system agent added in the pre-reaction for preparing the zinc-free vulcanizing auxiliary agent is a promoting agent, and the above rubber product is prepared by using the zinc-free vulcanizing auxiliary agent by the following method: (a) the elastomer, the filler, the zinc-free vulcanizing auxiliary agent, and other optional auxiliary agents are mixed in one or more stages by means of kneading, a mixing temperature reaches 125 °C-200 °C for rubber discharge, serving as a first stage masterbatch; (b) one or more thermal mechanical kneading is performed on the first stage masterbatch, a kneading temperature of 125 °C-180 °C is maintained, and rubber discharge is performed for 0-1200 s, serving as a second stage masterbatch; and any remaining other auxiliary agents, fillers, and anti-aging agents are added all at once or in batches during this stage; and (c) the second stage masterbatch and the vulcanizing system are mixed together in an internal mixer, the mixing temperature is ≤120 °C, and rubber discharge is performed to obtain final rubber. In the above method, a specific mixing condition is used according to the zinc-free vulcanizing auxiliary agent, such that the performance of the prepared rubber product can be further improved. Preferably, the final rubber prepared in the above process is vulcanized on the flat vulcanizing press, so as to obtain vulcanized rubber.

According to a fifth typical implementation of the present invention, a tire is provided. The tire includes the above rubber product. By using the above masterbatch-type vulcanizing auxiliary agent, the tire can realize zinc-free discharge, and thus is environmentally friendly. Moreover, the tire has excellent comprehensive performance without zinc.

The beneficial effects that the present invention may be achieved are further described below with reference to the embodiments and comparative examples.

### Embodiment 1

*10 phr* of stearic acid, 10 *phr* of an anti-aging agent 4020, and 10 *phr* of a vulcanizing promoting agent TBBS were mixed in decane, a pre-reaction was performed for 30 min at 160 °C, and a reaction system was mixed with 96.3 *phr* of SSBR and 30 *phr* of BR after a solvent was removed, so as to obtain a zinc-free masterbatch-type vulcanizing auxiliary agent.

The SSBR and the BR were added in an internal mixer, kneading was performed, then carbon black N234 and the above zinc-free masterbatch-type vulcanizing auxiliary agent were added, kneading was continuously performed until the mixture was well mixed, and a temperature during kneading was controlled at 150-160 °C.

Sulfur was added, kneading was performed, and the temperature during kneading did not exceed 110 °C.

The obtained rubber composition was vulcanized to obtain vulcanized rubber, and a rubber material physical performance test was performed.

### Comparative example 1

SSBR and BR were added in an internal mixer, after a period of kneading, carbon black N234 was added, stearic acid, zinc oxide, an anti-aging agent 4020, and a promoting agent TBBS were continuously kneaded until the mixture was well mixed, and a temperature during kneading was controlled at 150-160 °C.

Sulfur was added, kneading was performed, and the temperature during kneading did not exceed 110 °C.

The obtained rubber composition was vulcanized to obtain vulcanized rubber, and a rubber material physical performance test was performed.

### Embodiment 2

*10 phr* of stearic acid, 12.5 *phr* of an anti-aging agent A, and 11.5 *phr* of a vulcanizing promoting agent CZ were mixed in xylene, a pre-reaction was performed for 40 min at 130 °C, and a reaction system was mixed with 100 *phr* of IR after a solvent was removed, so as to obtain a zinc-free masterbatch-type vulcanizing auxiliary agent.

The IR was added in an internal mixer, kneading was performed, then silica, Si69 and the above zinc-free masterbatch-type vulcanizing auxiliary agent were added, kneading was continuously performed until the mixture was well mixed, and a temperature during kneading was controlled at 150-160 °C.

Sulfur and DPG were added, kneading was performed, and the temperature during kneading did not exceed 120 °C.

The obtained rubber composition was vulcanized to obtain vulcanized rubber, and a rubber material physical performance test was performed.

### Comparative example 2

IR was added in an internal mixer, kneading was performed, then silica, Si69, stearic acid, zinc oxide, an anti-aging agent A, and a promoting agent CZ were added, kneading was continuously performed until the mixture was well mixed, and a temperature during kneading was controlled at 150-160 °C.

Sulfur and DPG were added, kneading was performed, and the temperature during kneading did not exceed 120 °C.

The obtained rubber composition was vulcanized to obtain vulcanized rubber, and a rubber material physical performance test was performed.

The above rubber material formula was summarized in Table 1 below.

**Table 1**

| Name | Comparative example 1 | Embodiment 1 | Comparative example 2 | Embodiment 2 |
|---|---|---|---|---|
| SSBR | 96.3 | 96.3 | - | - |
| BR | 30 | 30 | - | - |
| IR | - | - | 100 | 100 |
| Silica | - | - | 50 | 60 |
| N234 | 50 | 60 | - | - |
| Silane coupling agent | - | - | 5 | 6 |
| Stearic acid | 2 | - | 2 | |
| Zinc oxide of indirect method | 3.5 | - | 3.5 | - |
| Anti-aging agent 4020 | 2 | - | - | - |
| Anti-aging agent A | - | - | 2.5 | - |
| Promoting agent TBBS | 2 | - | - | - |
| Promoting agent CZ | - | - | 2.3 | - |
| Sulfur powder | 1.4 | 1.4 | 1.8 | 1.8 |
| Zinc-free masterbatch-type vulcanizing auxiliary agent | - | 31 | - | 27 |
| Promoting agent DPG | - | - | 2.5 | 2.5 |
| Total rubber discharge | 187.2 | 218.7 | 169.6 | 197.3 |

Sources and parameters of various raw materials used in Embodiments 1-14 and Comparative Examples 1-9 were as follows.

IR, Qingdao Ecos New Materials Co., Ltd.

Silica, NEWSIL1165-MP, Wuxi Quechen Silicon Chemical Co., Ltd., with a specific surface area being 165 m²/g.

Carbon black, N234, Shandong Sino Rubber Polymer Material Co., Ltd., with a specific surface area being 119 m²/g.

Silane coupling agent Si69, Nanjing Shuguang Chemical Group Co., Ltd.

SSBR, PetroChina Dushanzi Petrochemical Company (styrene 25%, ethylene 64%).

SBR, Sinopec Qilu Petrochemical Company ESBR1502 (styrene content 23.5%).

BR, Sinopec Qilu Petrochemical Company BR9000 (nickel-based high cis polybutadiene, cis content 97%).

NR, Xishuangbanna Sinochem Rubber Co., Ltd. SCR5.

Stearic acid, PF1808, Licheng (Malaysia) Sdn. Bhd.

Zinc oxide, Dalian Zinc Oxide Plant.

Anti-aging agent 4020, Jiangsu Sennics Co., Ltd.

Anti-aging agent 4010NA, Shandong Sunsine Chemical Co., Ltd.

Anti-aging agent 7PPD, Jiangsu Sennics Co., Ltd.

Anti-aging agent A, self-synthesized,

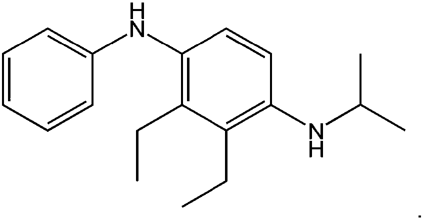

Anti-aging agent B, self-synthesized,

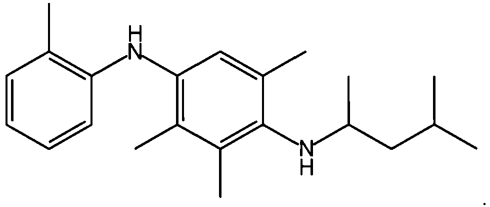

Anti-aging agent C, self-synthesized,

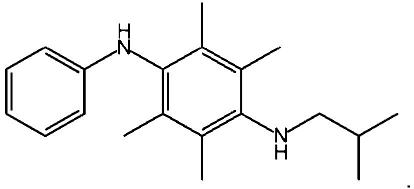

Anti-aging agent D, self-synthesized,

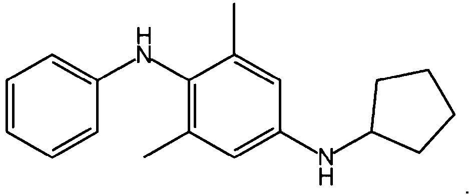

Anti-aging agent E, self-synthesized,

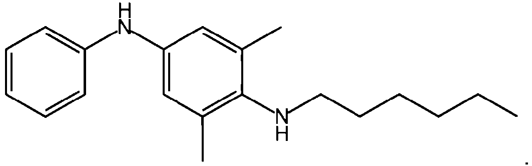

Anti-aging agent F, self-synthesized,

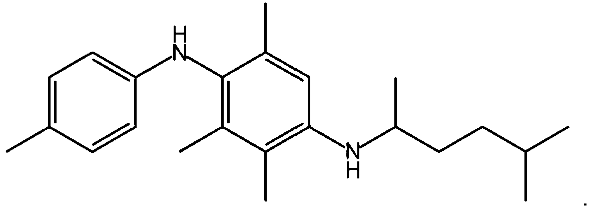

Promoting agent CZ, Shandong Sunsine Chemical Co., Ltd.

Promoting agent TBBS, Shandong Sunsine Chemical Co., Ltd.

Promoting agent MBTS, Chaoyang Tianming Industry and Trade Co., Ltd.

Promoting agent DPG, Shandong Shanxian Chemical Co., Ltd.

Sulfur, Wudi Jinsheng Chemical Co., Ltd.

The vulcanization characteristics of the rubber material prepared in the above embodiments and comparative examples were determined according to GB/T 16584-1996 Determination of Vulcanization Characteristics of moving die rheometer for Rubber, and test results were shown in Table 2.

The physical properties (tensile strength, elongation at break, 100% stress at definite elongation, and 300% stress at definite elongation) of the rubber material prepared in the above embodiments and comparative examples were determined according to GB/T 528-2009 Determination of Tensile Stress-Strain Properties of Vulcanized Rubber or Thermoplastic Rubber, and results were shown in Table 2.

The hardness of the rubber material prepared in the above embodiments and comparative examples were determined according to GB/T 531.1-2008 Test Methods for Indentation Hardness of Vulcanized Rubber or Thermoplastic Rubber-Part 1: Shore Durometer Method (Shore Hardness), and test results were shown in Table 2.

The 20 °C elastic modulus of the rubber material was determined according to GB/T 9870.1-2006 Determination of Dynamic Performance of Vulcanized Rubber or Thermoplastic Rubber-Part 1: General Rules, the tanδmax of the rubber material prepared in the above embodiments and comparative examples were determined by a rotational rheometer, and test results were shown in Table 2.

In Table 2 and tables for subsequent physical property test results, for ease of comparison, test data of the embodiments was based on corresponding comparative examples with identical compositions except for zinc oxide. The index value obtained, for example, the MH value of Embodiment 1 in Table 1, was calculated as the ratio of its measured value to the measured MH value of Comparative Example 1 multiplied by 100. A greater value indicated a higher index.

**Table 2**

| Name | Comparative example 1 | Embodiment 1 | Comparative example 2 | Embodiment 2 |
|---|---|---|---|---|
| MH, dNm | 100 | 96 | 100 | 88 |
| Tensile strength, MPa | 100 | 95 | 100 | 92 |
| Elongation at break, % | 100 | 96 | 100 | 89 |
| 100% stress at definite elongation, MPa | 100 | 95 | 100 | 90 |
| 300% stress at definite elongation, MPa | 100 | 95 | 100 | 88 |
| T300/T100 | 100 | 100 | 100 | 98 |
| Hardness, Shore A | 100 | 97 | 100 | 85 |
| 60 °C *tanδmax* | 100 | 106 | 100 | 111 |
| 20 °C E',MPa | 100 | 95 | 100 | 89 |

From the results in Table 2, it might be seen that, the rubber material (Embodiments 1 and 2) prepared using the rubber composition of the present invention had crosslinking density, modulus, stress, hardness, mechanical properties, and hysteresis properties comparable to those of conventional zinc-containing rubber materials (corresponding to Comparative examples 1 and 2, respectively), and thus might be applied to rubber products and tires.

The process of preparing the zinc-free masterbatch-type vulcanizing auxiliary agents 3-9 was the same as the process of preparing the zinc-free masterbatch-type vulcanizing auxiliary agent in Embodiment 1. A difference between the two processes lied in a specific component amount used during preparation and a process parameter for pre-reaction. The specific component amounts involved in the zinc-free masterbatch-type vulcanizing auxiliary agents 3-9 were shown in Table 3 below, while the process parameters were shown in Table 4 below.

**Table 3**

| Name | Zinc-free masterbat ch-type vulcanizin g auxiliary agent 3 | Zinc-free masterbat ch-type vulcanizin g auxiliary agent 4 | Zinc-free masterbat ch-type vulcanizin g auxiliary agent 5 | Zinc-free masterbat ch-type vulcanizin g auxiliary agent 6 | Zinc-free masterbat ch-type vulcanizin g auxiliary agent 7 | Zinc-free masterbat ch-type vulcanizin g auxiliary agent 8 | Zinc-free masterbat ch-type vulcanizin g auxiliary agent 9 |
|---|---|---|---|---|---|---|---|
| Steari c acid | 10 | 10 | 10 | 10 | 10 | 10 | 10 |
| Anti-a ging agent 7PPD | - | 12.5 | - | - | - | - | - |
| Anti-a ging | - | - | - | 10 | - | - | - |
| agent 4010 | | | | | | | |
| Anti-a ging agent B | 12.5 | - | - | - | - | - | - |
| Anti-a ging agent C | - | - | 11.5 | - | - | - | - |
| Anti-a ging agent D | - | - | - | - | - | 12.5 | - |
| Anti-a ging agent E | - | - | - | - | - | - | 11 |
| Anti-a ging agent F | - | - | - | - | 12.5 | - | - |
| Prom oting agent CZ | 11.5 | - | - | 12 | - | 10.0 | - |
| Prom oting agent MBTS | - | 13 | - | - | 10.0 | - | - |
| Prom | - | - | 12.5 | - | - | - | 11 |
| oting agent TBBS | | | | | | | |
| SBR | - | - | 100 | - | - | - | - |
| BR | 100 | - | - | - | - | 100 | - |
| IR | - | - | - | 100 | 100 | - | - |
| NR | - | 100 | - | - | - | - | 100 |

**Table 4**

| Numbe r | Zinc-free masterbat ch-type vulcanizin g auxiliary agent 3 | Zinc-free masterbat ch-type vulcanizin g auxiliary agent 4 | Zinc-free masterbat ch-type vulcanizin g auxiliary agent 5 | Zinc-free masterbat ch-type vulcanizin g auxiliary agent 6 | Zinc-free masterbat ch-type vulcanizin g auxiliary agent 7 | Zinc-free masterbat ch-type vulcanizin g auxiliary agent 8 | Zinc-free masterbatc h-type vulcanizing auxiliary agent 9 |
|---|---|---|---|---|---|---|---|
| Temper ature (°C) | 110 | 130 | 120 | 170 | 135 | 155 | 150 |
| Time (min) | 130 | 60 | 100 | 25 | 70 | 40 | 90 |
| Solvent | Toluene | Xylene | Butanol | Octanol | Octane | Nonane | N-methylpyr rolidone |

For the preparation of the zinc-free masterbatch-type vulcanizing auxiliary agents 10-14, the formulas and preparation processes were the same as those of the zinc-free masterbatch-type vulcanizing auxiliary agent 6, differing only in parameter conditions for pre-reaction listed in Table 5.

**Table 5**

| Number | Zinc-free masterbatch-ty pe vulcanizing auxiliary agent | Zinc-free masterbatch-ty pe vulcanizing auxiliary agent | Zinc-free masterbatch-ty pe vulcanizing auxiliary agent | Zinc-free masterbatch-ty pe vulcanizing auxiliary agent | Zinc-free masterbatch-ty pe vulcanizing auxiliary agent |
|---|---|---|---|---|---|
| | 10 | 11 | 12 | 13 | 14 |
| **Temperat** ure (°C) | 100 | 110 | 190 | 170 | 170 |
| Time (min) | 120 | 120 | 120 | 50 | 5 |
| Solvent | N-methylpyrroli done | N-methylpyrroli done | N-methylpyrroli done | N-methylpyrroli done | N-methylpyrroli done |

Embodiments 3-9 prepared final rubber and vulcanized rubber by using the same method as Embodiment 1, and Comparative examples 3-9 prepared final rubber and vulcanized rubber by using the same method as Comparative example 1, with the formulas shown in Tables 6 and 7 below. Further, the rubber material formulas and preparation processes of Embodiments 10-14 were the same as Embodiment 6. The only difference was that the zinc-free masterbatch-type vulcanizing auxiliary agents in Embodiments 10-14 were zinc-free masterbatch-type vulcanizing auxiliary agents 10-14, respectively, which were not listed in the table.

**Table 6**

| Name | Comparative example 3 | Embodi ment 3 | Comparative example 4 | Embodiment 4 | Comparative example 5 | Embodiment 5 | Comparative example 6 | Embodiment 6 |
|---|---|---|---|---|---|---|---|---|
| SBR | - | - | - | - | 100 | 100 | - | - |
| BR | - | - | 100 | 100 | - | - | - | - |
| IR | 100 | 100 | - | - | - | - | - | - |
| NR | - | - | - | - | - | - | 100 | 100 |
| Silica | 55 | 66 | - | - | 65 | 78 | - | - |
| N234 | | - | 60 | 72 | - | - | 55 | 66 |
| Silane coupling agent | 6.0 | 7.2 | - | - | 6.5 | 7.8 | - | - |
| Stearic acid | 2.0 | - | 2.0 | - | 2.0 | - | 2.0 | - |
| Zinc oxide | 3.5 | - | 3.5 | - | 3.5 | - | 3.5 | - |
| Anti-aging agent 7PPD | - | - | 2.5 | - | - | - | - | - |
| Anti-aging agent 4010 | - | - | - | - | - | - | 2 | - |
| Anti-aging agent B | 2.5 | - | - | - | - | - | - | - |
| Anti-aging agent C | - | - | - | - | 2.3 | - | - | - |
| Promoting agent CZ | 2.3 | - | - | - | - | - | 2.3 | - |
| Promoting agent MBTS | - | - | 2.5 | - | - | - | - | - |
| Promoting agent TBBS | - | - | - | - | 2.5 | - | - | - |
| Sulfur powder | 1.4 | 1.4 | 1.4 | 1.4 | 1.4 | 1.4 | 1.8 | 1.8 |
| Zinc-free masterbatc h-type vulcanizing auxiliary agent 3 | - | 29 | - | - | - | - | - | - |
| Zinc-free masterbatc | - | - | - | 27 | - | - | - | - |
| h-type vulcanizing auxiliary agent 4 | | | | | | | | |
| Zinc-free masterbatc h-type vulcanizing auxiliary agent 5 | - | - | - | - | - | 27 | - | - |
| Zinc-free masterbatc h-type vulcanizing auxiliary agent 6 | - | - | - | - | - | - | - | 26 |
| Promoting agent DPG | 2 | 2 | - | - | 2 | 2 | - | - |

**Table 7**

| Name | Comparative example 7 | Embodiment 7 | Comparative example 8 | Embodiment 8 | Comparative example 9 | Embodiment 9 |
|---|---|---|---|---|---|---|
| SBR | - | - | - | - | 100 | 100 |
| IR | - | - | 100 | 100 | - | - |
| NR | 100 | 100 | - | - | - | - |
| Silica | 50 | 60 | - | - | - | - |
| N234 | - | - | 70 | 84 | 75 | 90 |
| Silane coupling agent | 5.0 | 6.0 | - | | - | - |
| Stearic acid | 2.0 | - | 2.0 | - | 2.0 | - |
| Zinc oxide | 3.5 | - | 3.5 | - | 3.5 | - |
| Anti-aging agent D | - | - | 2.5 | - | - | - |
| Anti-aging agent E | - | - | - | - | 2.2 | - |
| Anti-aging agent F | 2.5 | - | - | - | - | - |
| Promoting agent CZ | - | - | 2.0 | - | - | - |
| Promoting agent MBTS | 2.0 | - | - | - | - | - |
| Promoting agent TBBS | - | - | - | - | 2.0 | |
| Sulfur powder | 1.4 | 1.4 | 1.8 | 1.8 | 1.8 | 1.8 |
| Zinc-free masterbatch-type vulcanizing auxiliary agent 7 | - | 26 | - | - | - | - |
| Zinc-free masterbatch-type vulcanizing auxiliary agent 8 | - | - | - | 27 | - | - |
| Zinc-free masterbatch-type vulcanizing auxiliary agent | - | - | - | - | - | 28 |
| 9 | | | | | | |
| Promoting agent DPG | 2 | 2 | - | - | - | - |

Embodiments 3-9 and Comparative examples 3-9 were tested using the same test method as Embodiment 1, and the results were shown in Tables 8 and 9.

**Table 8**

| Name | Comparative example 3 | Embodiment 3 | Comparative example 4 | Embodiment 4 | Comparative example 5 | Embodiment 5 | Comparative example 6 | Embodiment 6 |
|---|---|---|---|---|---|---|---|---|
| MH, dNm | 100 | 99 | 100 | 92 | 100 | 99 | 100 | 92 |
| Tensile strength MPa | 100 | 97 | 100 | 89 | 100 | 103 | 100 | 94 |
| Elongation at break, % | 100 | 103 | 100 | 90 | 100 | 109 | 100 | 98 |
| 100% stress at definite elongation, MPa | 100 | 97 | 100 | 93 | 100 | 105 | 100 | 93 |
| 300% stress at | 100 | 97 | 100 | 90 | 100 | 108 | 100 | 95 |
| definite elongation, MPa | | | | | | | | |
| T300/T 100 | 100 | 100 | 100 | 97 | 100 | 103 | 100 | 102 |
| Hardness, Shore A | 100 | 97 | 100 | 95 | 100 | 99 | 100 | 93 |
| 60 °C *tanδma X* | 100 | 104 | 100 | 108 | 100 | 97 | 100 | 98 |
| 20 °C *E'*, MPa | 100 | 103 | 100 | 92 | 100 | 104 | 100 | 98 |

**Table 9**

| Name | Comparative example 7 | Embodiment 7 | Comparative example 8 | Embodiment 8 | Comparative example 9 | Embodiment 9 |
|---|---|---|---|---|---|---|
| MH, dNm | 100 | 104 | 100 | 102 | 100 | 90 |
| Tensile strength, MPa | 100 | 98 | 100 | 98 | 100 | 94 |
| Elongation at break, % | 100 | 96 | 100 | 95 | 100 | 93 |
| 100% stress at definite elongation , MPa | 100 | 94 | 100 | 99 | 100 | 93 |
| 300% stress at definite elongation , MPa | 100 | 94 | 100 | 96 | 100 | 94 |
| T300/T10 0 | 100 | 100 | 100 | 97 | 100 | 101 |
| Hardness, Shore A | 100 | 105 | 100 | 104 | 100 | 88 |
| 60 °C *tanδmax* | 100 | 103 | 100 | 103 | 100 | 97 |
| 20 °C E', MPa | 100 | 98 | 100 | 98 | 100 | 95 |

From Table 8 and Table 9, it might be seen that, compared with the conventional zinc-containing rubber materials (corresponding to Comparative examples 3-9, respectively), the rubber material (Embodiments 3-9) containing the zinc-free masterbatch-type vulcanizing auxiliary agent prepared by the method of the present invention had the performance parameters met requirements after the vulcanization test, and thus might be applied to production and manufacturing of rubber products and tires.

Furthermore, the vulcanized rubber of above Embodiments 2, 3, 5, and 7-9 was aged and then extracted, extracted solutions were detected using liquid chromatography tandem high-resolution mass spectrometry (UPLC-HRMS/MS), and a quinone compound was not detected, indicating that the environmentally-friendly aniline anti-aging agents A-F used in the present invention did not produce highly toxic quinone conversion products in rubber residues, making them relatively environmentally friendly.

**Table 10**

| Name | Comparati ve example 6 | Embodim ent 6 | Embodim ent 10 | Embodim ent 11 | Embodim ent 12 | Embodim ent 13 | Embodim ent 14 |
|---|---|---|---|---|---|---|---|
| MH, | 100 | 92 | 84 | 87 | 97 | 95 | 86 |
| dNm | | | | | | | |
| Tensile strength, MPa | 100 | 94 | 85 | 87 | 99 | 96 | 85 |
| Elongati on at break, % | 100 | 98 | 90 | 93 | 104 | 100 | 91 |
| 100% stress at definite elongatio n, MPa | 100 | 93 | 91 | 92 | 98 | 95 | 92 |
| 300% stress at definite elongatio n, MPa | 100 | 95 | 89 | 90 | 102 | 98 | 89 |
| T300/T1 00 | 100 | 102 | 98 | 98 | 104 | 103 | 97 |
| Hardnes s, Shore A | 100 | 93 | 86 | 89 | 96 | 95 | 87 |
| 60 °C *tanδmax* | 100 | 98 | 105 | 103 | 96 | 94 | 104 |
| 20 °C E', MPa | 100 | 98 | 104 | 102 | 95 | 96 | 102 |

Sources or technical parameters of the raw materials or reagents used in Embodiments 15-28 and Comparative examples 10-18 were as follows.

IR, Qingdao Ecos New Materials Co., Ltd.

Silica, NEWSIL1165-MP, Wuxi Quechen Silicon Chemical Co., Ltd.

Carbon black, N234, Shandong Sino Rubber Polymer Material Co., Ltd.

Silane coupling agent Si69, Nanjing Shuguang Chemical Group Co., Ltd.

SSBR, PetroChina Dushanzi Petrochemical Company (styrene 25%, ethylene 64%).

SBR, Sinopec Qilu Petrochemical Company ESBR1502 (styrene content 23.5%).

BR, Sinopec Qilu Petrochemical Company BR9000 (nickel-based high cis polybutadiene, cis content 97%).

NR, Xishuangbanna Sinochem Rubber Co., Ltd. SCR5.

Stearic acid, PF1808, Licheng (Malaysia) Sdn. Bhd.

Zinc oxide, Dalian Zinc Oxide Plant.

Anti-aging agent 4020, Jiangsu Sennics Co., Ltd.

Anti-aging agent 4010NA, Shandong Sunsine Chemical Co., Ltd.

Anti-aging agent 7PPD, Jiangsu Sennics Co., Ltd.

Anti-aging agent a, self-synthesized, with a structural formula being

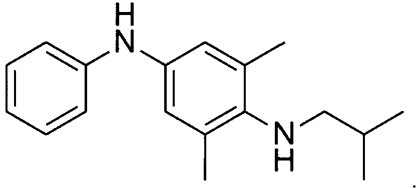

Anti-aging agent b, self-synthesized, with a structural formula being

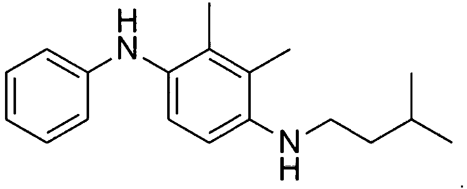

Anti-aging agent c, self-synthesized, with a structural formula being

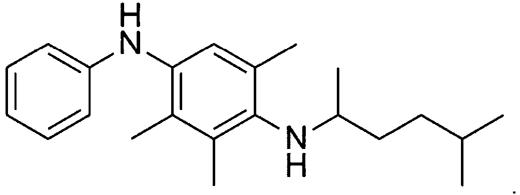

Anti-aging agent d, self-synthesized, with a structural formula being

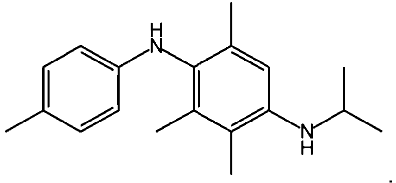

Anti-aging agent e, self-synthesized, with a structural formula being

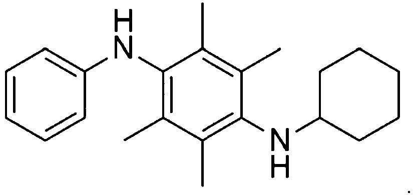

Anti-aging agent f, self-synthesized, with a structural formula being

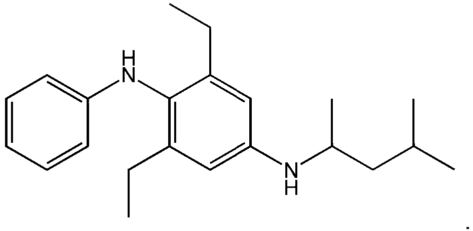

Promoting agent CZ, Shandong Sunsine Chemical Co., Ltd.

Promoting agent TBBS, Shandong Sunsine Chemical Co., Ltd.

Promoting agent MBTS, Chaoyang Tianming Industry and Trade Co., Ltd.

Promoting agent DPG, Shandong Shanxian Chemical Co., Ltd.

Sulfur, Wudi Jinsheng Chemical Co., Ltd.

### Embodiment 15

*10 phr* of stearic acid, 17.5 *phr* of zinc oxide, 10 *phr* of an anti-aging agent 4020, and 10 *phr* of a vulcanizing promoting agent TBBS were mixed in decane, a pre-reaction was performed for 30 min at 160 °C, the zinc oxide was removed through filtration after room temperature was returned, and filtrate was dried and then mixed with 96.3 *phr* of SSBR and 30 *phr* of BR, so as to obtain a zinc-free vulcanizing auxiliary agent.

The rubber material was prepared according to the formula in Table 11, and the detailed method was as follows.

The SSBR and the BR were added in an internal mixer and kneaded, then carbon black N234 and the above zinc-free vulcanizing auxiliary agent were added, kneading was continuously performed until the mixture was well mixed, and a temperature during kneading was controlled at 150-160 °C.

Sulfur was added, kneading was performed, and the temperature during kneading did not exceed 110 °C.

The obtained rubber composition was vulcanized to obtain vulcanized rubber, and a rubber material physical performance test was performed.

### Comparative example 10

The rubber material was prepared according to the formula in Table 11, and the detailed method was as follows.

SSBR and BR were added in an internal mixer and kneaded, carbon black N234 was added, stearic acid, zinc oxide, an anti-aging agent 4020, and a promoting agent TBBS were continuously kneaded until the mixture was well mixed, and a temperature during kneading was controlled at 150-160 °C.

Sulfur was added, kneading was performed, and the temperature during kneading did not exceed 110 °C.

The obtained rubber composition was vulcanized to obtain vulcanized rubber, and a rubber material physical performance test was performed.

### Embodiment 16

*10 phr* of stearic acid, 17.5 *phr* of zinc oxide, 12.5 *phr* of an anti-aging agent a, and 11.5 *phr* of a vulcanizing promoting agent CZ were mixed in xylene, a pre-reaction was performed for 40 min at 130 °C, the zinc oxide was removed through filtration after room temperature was returned, and filtrate was dried and then mixed with 100 *phr of* IR, so as to obtain a zinc-free vulcanizing auxiliary agent.

The rubber material was prepared according to the formula in Table 11, and the detailed method was as follows.

The IR was added in an internal mixer and kneaded, then silica, Si69 and the above zinc-free vulcanizing auxiliary agent were added, kneading was continuously performed until the mixture was well mixed, and a temperature during kneading was controlled at 150-160 °C.

Sulfur and DPG were added, kneading was performed, and the temperature during kneading did not exceed 120 °C.

The obtained rubber composition was vulcanized to obtain vulcanized rubber, and a rubber material physical performance test was performed.

### Comparative example 11

The rubber material was prepared according to the formula in Table 11, and the detailed method was as follows.

IR was added in an internal mixer and kneaded, then silica, Si69, stearic acid, zinc oxide, an anti-aging agent a, and a promoting agent CZ were added, kneading was continuously performed until the mixture was well mixed, and a temperature during kneading was controlled at 150-160 °C.

Sulfur and DPG were added, kneading was performed, and the temperature during kneading did not exceed 120 °C.

The obtained rubber composition was vulcanized to obtain vulcanized rubber, and a rubber material physical performance test was performed.

Zinc-free blank sample Comparative examples 0-1 and 0-2 were set. Unlike Comparative examples 1 and 2, neither Comparative example 0-1 nor Comparative example 0-2 was added with the zinc oxide.

**Table 11 Rubber material formula (in phr)**

| Name | Comparative example 10 | Embodiment 15 | Comparative example 11 | Embodiment 16 |
|---|---|---|---|---|
| SSBR | 96.3 | 96.3 | - | - |
| BR | 30 | 30 | - | - |
| IR | - | - | 100 | 100 |
| Silica | - | - | 50 | 60 |
| N234 | 50 | 60 | - | - |
| Silane coupling agent | - | - | 5 | 6 |
| Stearic acid | 2 | - | 2 | |
| Zinc oxide of indirect method | 3.5 | - | 3.5 | - |
| Anti-aging agent 4020 | 2 | - | - | - |
| Anti-aging agent a | - | - | 2.5 | - |
| Promoting agent TBBS | 2 | - | - | - |
| Promoting agent CZ | - | - | 2.3 | - |
| Sulfur powder | 1.4 | 1.4 | 1.8 | 1.8 |
| Zinc-free vulcanizing auxiliary agent | - | 35 | - | 30 |
| Promoting agent DPG | - | - | 2.5 | 2.5 |
| Total rubber discharge | 187.2 | 222.7 | 169.6 | 200.3 |

The content of zinc in the rubber material was determined according to SN/T 2945-2011 Determination of Lead, Cadmium, Chromium, Copper, Manganese, and Zinc in Rubber and Products Thereof by Inductively Coupled Plasma Atomic Emission Spectroscopy, and test results were shown in Table 12.

**Table 12**

| Name | Comparativ e example 10 | Embodimen t 15 | Comparativ e examples 0-1 | Comparativ e example 11 | Embodimen t 16 | Comparativ e examples 0-2 |
|---|---|---|---|---|---|---|
| Rubber compound , Zn% | 1.50 | 0.0008 | 0.0016 | 1.66 | 0.0009 | 0.0014 |
| Vulcanize d rubber, Zn% | 1.46 | 0.0008 | 0.0016 | 1.61 | 0.0009 | 0.0014 |

From the results in Table 12, it might be seen that, the zinc content in the rubber composition containing the zinc-free vulcanizing auxiliary agent was comparable to that in the zero-zinc blank sample without zinc oxide, both being significantly lower than the zinc content in conventional zinc-containing formulas.

The performance tests of the rubber materials in the above embodiments were performed using the same method as Embodiment 1, and the test results were shown in Table 13. In Table 13 and tables for subsequent physical property test results, for ease of comparison, test data of the embodiments was based on corresponding comparative examples with identical compositions except for zinc oxide. The index value obtained, for example, the MH value of Embodiment 15 in Table 13, was calculated as the ratio of its measured value to the measured MH value of Comparative example 10 multiplied by 100. A greater value indicated a higher index.

**Table 13 Physical property test result**

| Name | Comparative example 10 | Embodiment 15 | Comparative example 11 | Embodiment 16 |
|---|---|---|---|---|
| MH, dNm | 100 | 95 | 100 | 85 |
| Tensile strength, MPa | 100 | 97 | 100 | 90 |
| Elongation at break, % | 100 | 98 | 100 | 88 |
| 100% stress at definite elongation, MPa | 100 | 94 | 100 | 86 |
| 300% stress at definite elongation, MPa | 100 | 95 | 100 | 86 |
| T300/T100 | 100 | 101 | 100 | 100 |
| Hardness, Shore A | 100 | 94 | 100 | 86 |
| 60 °C *tanδmax* | 100 | 105 | 100 | 108 |
| 20 °C *E',* MPa | 100 | 93 | 100 | 91 |

From the results in Table 13, it might be seen that, the rubber material (Embodiments 15 and 16) prepared using the rubber composition without zinc of the present invention had crosslinking density, modulus, stress, hardness, mechanical properties, and hysteresis properties comparable to those of conventional zinc-containing rubber materials (corresponding to Comparative examples 10 and 11, respectively), and thus might be applied to rubber products and tires.

#3'-#9' zinc-free vulcanizing auxiliary agents were prepared, the specific component amounts involved in the preparation process were shown in Table 14 below, while the process parameters were shown in Table 15 below. The preparation process included: the stearic acid, the zinc oxide, the anti-aging agent, and the promoting agent were mixed in the solvent, the pre-reaction was performed for a period of time, the zinc oxide was removed through filtration after room temperature was returned, and the filtrate was subjected to solvent removal and then mixed with the rubber (#5'-#9'), or subjected to liquid phase mixing with the rubber and then subjected to solvent removal (#3'-#4'), so as to obtain the zinc-free vulcanizing auxiliary agents. Through determination, the zinc contents of the zinc-free vulcanizing auxiliary agents #3'-#9' were all 0.

For the preparation of the zinc-free vulcanizing auxiliary agents #10'-#14', the formulas and preparation processes were the same as those of the zinc-free vulcanizing auxiliary agent #6', differing only in parameter conditions for pre-reaction listed in Table 15. Through determination, the zinc contents of the zinc-free vulcanizing auxiliary agents #10'-#14' were all 0.

**Table 14**

| | Zinc-free vulcanizing auxiliary agent | | | | | | |
|---|---|---|---|---|---|---|---|
| Number | #3' | #4' | #5' | #6' | #7' | #8' | #9' |
| Stearic acid | 10 | 10 | 10 | 10 | 10 | 10 | 10 |
| Zinc oxide | 17.5 | 17.5 | 17.5 | 17.5 | 17.5 | 17.5 | 17.5 |
| Anti-aging agent 7PPD | 12.5 | - | - | - | - | - | - |
| Anti-aging agent 4010 | - | 10 | - | - | - | - | - |
| Anti-aging agent b | - | - | 12.5 | - | - | - | - |
| Anti-aging agent c | - | - | - | 11.5 | - | - | - |
| Anti-aging agent d | - | - | - | - | 12.5 | - | - |
| Anti-aging agent e | - | - | - | - | - | 11 | - |
| Anti-aging agent f | - | - | - | - | - | - | 12.5 |
| Promoting agent CZ | - | 11.5 | 11.5 | - | 10.0 | - | - |
| Promoting agent MBTS | 12.5 | - | - | - | - | - | 10.0 |
| Promoting agent TBBS | - | - | - | 12.5 | - | 10.0 | - |
| SBR | - | - | - | 100 | - | - | - |
| BR | - | - | 100 | - | 100 | - | - |
| IR | - | 100 | - | - | - | - | 100 |
| NR | 100 | - | - | - | - | 100 | - |

**Table 15**

| | Zinc-free vulcanizing auxiliary agent | | | | | | | | | | | |
|---|---|---|---|---|---|---|---|---|---|---|---|---|
| Numbe r | #3' | #4' | #5' | #6' | #7' | #8' | #9' | #10' | #11' | #12' | #13' | #14' |
| Temper ature (°C) | 110 | 140 | 115 | 170 | 135 | 150 | 160 | 110 | 100 | 190 | 170 | 170 |
| Time (min) | 120 | 40 | 90 | 25 | 60 | 30 | 80 | 120 | 120 | 120 | 50 | 5 |
| Solvent | Tolu ene | Xyl ene | Buta nol | Octa nol | Oct ane | Non ane | N-methylpyr rolidone | Octa nol | Octa nol | Octa nol | Octa nol | Octa nol |

Embodiments 17-23 prepared final rubber and vulcanized rubber by using the same method as Embodiment 15, and Comparative examples 12-18 prepared final rubber and vulcanized rubber by using the same method as Comparative example 10, with the formulas shown in Tables 16 and 17 below.

**Table 16 Rubber material formula (in phr)**

| Name | Compar ative example 12 | Embodi ment 17 | Compar ative example 13 | Embodi ment 18 | Compar ative example 14 | Embodi ment 19 | Compar ative example 15 | Embodi ment 20 |
|---|---|---|---|---|---|---|---|---|
| SBR | - | - | - | - | - | - | 100 | 100 |
| BR | 100 | 100 | - | - | - | - | - | - |
| IR | - | - | - | - | 100 | 100 | - | - |
| NR | - | - | 100 | 100 | - | - | - | - |
| Silica | - | - | - | - | 55 | 66 | 65 | 78 |
| N234 | 60 | 72 | 55 | 66 | | - | - | - |
| Silane coupling agent | - | - | - | - | 6.0 | 7.2 | 6.5 | 7.8 |
| Stearic acid | 2.0 | - | 2.0 | - | 2.0 | - | 2.0 | - |
| Zinc oxide | 3.5 | - | 3.5 | - | 3.5 | - | 3.5 | - |
| Anti-aging agent 7PPD | 2.5 | - | - | - | - | - | - | - |
| Anti-aging agent 4010 | - | - | 2 | - | - | - | - | - |
| Anti-aging agent b | - | - | - | - | 2.5 | - | - | - |
| Anti-aging agent c | - | - | - | - | - | - | 2.3 | - |
| Promoting agent CZ | - | - | 2.3 | - | 2.3 | - | - | - |
| Promoting agent MBTS | 2.5 | - | - | - | - | - | - | - |
| Promoting agent TBBS | - | - | - | - | - | - | 2.5 | - |
| Sulfur powder | 1.4 | 1.4 | 1.8 | 1.8 | 1.4 | 1.4 | 1.4 | 1.4 |
| Zinc-free vulcanizing auxiliary agent #3' | - | 30 | - | - | - | - | - | - |
| Zinc-free masterbatc h-type vulcanizing auxiliary agent #4' | - | - | - | 28 | - | - | - | - |
| Zinc-free | - | - | - | - | - | 35 | - | - |
| masterbatc h-type vulcanizing auxiliary agent #5' | | | | | | | | |
| Zinc-free masterbatc h-type vulcanizing auxiliary agent #6' | - | - | - | - | - | - | - | 32 |
| Promoting agent DPG | - | - | - | - | 2 | 2 | 2 | 2 |

**Table 17 Rubber material formula (in phr)**

| Name | Comparativ e example 16 | Embodimen t 21 | Comparativ e example 17 | Embodimen t 22 | Comparativ e example 18 | Embodimen t 23 |
|---|---|---|---|---|---|---|
| SBR | - | - | 100 | 100 | - | - |
| IR | 100 | 100 | - | - | - | - |
| NR | - | - | - | - | 100 | 100 |
| Silica | - | - | - | - | 50 | 60 |
| N234 | 70 | 84 | 75 | 90 | - | - |
| Silane coupling agent | - | | - | - | 5.0 | 6.0 |
| Stearic acid | 2.0 | - | 2.0 | - | 2.0 | - |
| Zinc oxide | 3.5 | - | 3.5 | - | 3.5 | - |
| Anti-aging | 2.5 | - | - | - | - | - |
| agent d | | | | | | |
| Anti-aging agent e | - | - | 2.2 | - | - | - |
| Anti-aging agent f | - | - | - | - | 2.5 | - |
| Promoting agent CZ | 2.0 | - | - | - | - | - |
| Promoting agent MBTS | - | - | - | - | 2.0 | - |
| Promoting agent TBBS | - | - | 2.0 | | - | - |
| Sulfur powder | 1.8 | 1.8 | 1.8 | 1.8 | 1.4 | 1.4 |
| Zinc-free vulcanizin g auxiliary agent #7' | - | 25 | - | - | - | - |
| Zinc-free vulcanizin g auxiliary agent #8' | - | - | - | 28 | - | - |
| Zinc-free vulcanizin g auxiliary agent #9' | - | - | - | - | - | 30 |
| Promoting agent DPG | - | - | - | - | 2 | 2 |

The formulas for Embodiments 24-28 were identical to those in Embodiment 20 except for the zinc-free vulcanizing auxiliary agents. The zinc-free vulcanizing auxiliary agents used in Embodiments 24-28 are the zinc-free vulcanizing auxiliary agents #10'-#14', respectively. The final rubber and vulcanized rubber were prepared using the same method as in Embodiment 15.

Embodiments 17-28 and Comparative examples 12-21 were tested using the same test method as Embodiment 1, and the results were shown in Tables 18 and 19.

**Table 18 Physical property test result**

| Name | Compar ative example 12 | Embodi ment 17 | Compar ative example 13 | Embodi ment 18 | Compar ative example 14 | Embodi ment 19 | Compar ative example 15 | Embodi ment 20 |
|---|---|---|---|---|---|---|---|---|
| MH, dNm | 100 | 97 | 100 | 90 | 100 | 93 | 100 | 102 |
| Tensile strengt h, MPa | 100 | 99 | 100 | 88 | 100 | 98 | 100 | 105 |
| Elongat ion at break, % | 100 | 107 | 100 | 87 | 100 | 110 | 100 | 108 |
| 100% stress at definite elongati on, MPa | 100 | 95 | 100 | 90 | 100 | 102 | 100 | 104 |
| 300% stress at definite | 100 | 96 | 100 | 90 | 100 | 100 | 100 | 109 |
| elongati on, MPa | | | | | | | | |
| T300/T 100 | 100 | 101 | 100 | 100 | 100 | 98 | 100 | 105 |
| Hardne ss, Shore A | 100 | 93 | 100 | 89 | 100 | 97 | 100 | 104 |
| 60 °C *tanδma X* | 100 | 102 | 100 | 106 | 100 | 101 | 100 | 96 |
| 20 °*CE*', MPa | 100 | 94 | 100 | 90 | 100 | 97 | 100 | 107 |

**Table 19 Physical property test result**

| Name | Comparative example 16 | Embodiment 21 | Comparative example 17 | Embodiment 22 | Comparative example 18 | Embodiment 23 |
|---|---|---|---|---|---|---|
| MH, dNm | 100 | 92 | 100 | 95 | 100 | 86 |
| Tensile strength, MPa | 100 | 93 | 100 | 90 | 100 | 85 |
| Elongation at break, % | 100 | 92 | 100 | 93 | 100 | 90 |
| 100% stress at definite elongation | 100 | 91 | 100 | 89 | 100 | 88 |
| , MPa | | | | | | |
| 300% stress at definite elongation , MPa | 100 | 94 | 100 | 87 | 100 | 89 |
| T300/T10 0 | 100 | 103 | 100 | 98 | 100 | 101 |
| Hardness, Shore A | 100 | 94 | 100 | 94 | 100 | 97 |
| 60 °C *tanδmax* | 100 | 105 | 100 | 103 | 100 | 109 |
| 20 °C E', MPa | 100 | 95 | 100 | 93 | 100 | 93 |

**Table 20 Physical property test result**

| Name | Comparative example 15 | Embodiment 20 | Embodiment 24 | Embodiment 25 | Embodiment 26 | Embodiment 27 | Embodiment 28 |
|---|---|---|---|---|---|---|---|
| MH, dNm | 100 | 102 | 93 | 90 | 106 | 104 | 88 |
| Tensile strength, MPa | 100 | 105 | 90 | 86 | 108 | 106 | 85 |
| Elongati on at break, % | 100 | 108 | 89 | 88 | 111 | 110 | 87 |
| 100% stress at definite | 100 | 104 | 90 | 90 | 105 | 105 | 89 |
| elongatio n, MPa | | | | | | | |
| 300% stress at definite elongatio n, MPa | 100 | 109 | 85 | 84 | 115 | 111 | 83 |
| T300/T1 00 | 100 | 105 | 94 | 93 | 110 | 106 | 93 |
| Hardnes s, Shore A | 100 | 104 | 91 | 91 | 106 | 105 | 90 |
| 60 °C *tanδmax* | 100 | 96 | 110 | 113 | 92 | 94 | 115 |
| 20 °C E', MPa | 100 | 107 | 88 | 86 | 109 | 108 | 85 |

In Tables 18 and 19, compared with the conventional zinc-containing rubber materials (corresponding to Comparative examples 12-18, respectively), the rubber material (Embodiments 17-23) containing the zinc-free vulcanizing auxiliary agent prepared by the method of the present invention had the performance parameters met requirements after the vulcanization test, and thus might be applied to production and manufacturing of rubber products and tires. The vulcanized rubber of above Embodiments 16 and 19-28 was aged and then extracted, extracted solutions were detected using Ultra-High Performance Liquid Chromatography-High Resolution Tandem Mass Spectrometry (UPLC-HRMS/MS), and a quinone compound was not detected, indicating that the environmentally-friendly aniline anti-aging agents a-f used in the present invention did not produce highly toxic quinone conversion products in rubber residues, making it an environmentally-friendly rubber auxiliary agent.

In Table 20, when the zinc-free vulcanizing auxiliary agent was prepared, a higher temperature and a suitable pre-reaction time facilitated improvement of the performance, causing the rubber material containing same to have excellent performance.

It might be seen from the above description that, in the above embodiments of the present invention, the following technical effects were realized. In the above preparation method, under the action of the catalyst, the anti-aging agent reacted with a reagent in a vulcanizing system to generate an active intermediate. The active intermediate had an effect of promoting vulcanization and played a role in activating a promoting agent in advance, such that the active intermediate might replace zinc oxide to prepare rubber products such as tires completely free of zinc elements, could realize zinc-free discharge, and thus was environmentally friendly. Moreover, the vulcanizing auxiliary agent prepared by the above preparation method could cause the rubber composition containing same to obtain, without zinc, crosslinking density close to the zinc-containing rubber composition, as well as rubber material performance such as hardness, stress at definite elongation, hysteresis, etc.

The above are only the preferred embodiments of the present invention and are not intended to limit the present invention. For those skilled in the art, the present invention may have various modifications and variations. Any modifications, equivalent replacements, improvements and the like made within the spirit and principle of the present invention all fall within the scope of protection of the present invention.

## Claims

1. A method for preparing a vulcanizing auxiliary agent, comprising: pre-reacting an anti-aging agent and a vulcanizing system agent under the action of a catalyst, wherein the catalyst comprises stearic acid.

2. The preparation method according to claim 1, comprising:
S1, pre-reacting the catalyst, the anti-aging agent, and the vulcanizing system to obtain a pre-reaction mixture, wherein the catalyst is the stearic acid; and
S2, mixing the pre-reaction mixture and rubber to obtain a vulcanizing auxiliary agent.

3. The preparation method according to claim 1, comprising: pre-reacting catalyst, the anti-aging agent, and the vulcanizing system agent in a solvent, wherein the catalyst is zinc oxide and stearic acid; and sequentially performing zinc removal through filtration and solvent removal after pre-reaction, so as to obtain the vulcanizing auxiliary agent.

4. The preparation method according to any one of claims 1 to 3, wherein a reaction temperature of pre-reaction is 100-190 °C, and a reaction time is 1 min-120 min; and
preferably, the reaction temperature of pre-reaction is 110-170 °C, and the reaction time is 5 min-50 min.

5. The preparation method according to any one of claims 1 to 3, wherein pre-reaction is performed in the solvent, and preferably, the solvent is any one or more of butanol, octanol, N-methyl-2-pyrrolidone, octane, nonane, decane, toluene, and xylene; and/or
the vulcanizing system agent comprises any one or more of a vulcanizing agent and a promoting agent, the vulcanizing agent comprises any one or more of sulfur and a sulfur carrier, the promoting agent comprises any one or more of a sulfenamide promoting agent and a thiazole promoting agent, and preferably, the promoting agent comprises any one or more of CZ, DCBS, MBTS, MBT, and TBBS; and/or
the anti-aging agent is a phenylenediamine anti-aging agent, and preferably, the anti-aging agent has a structure shown in Formula I: 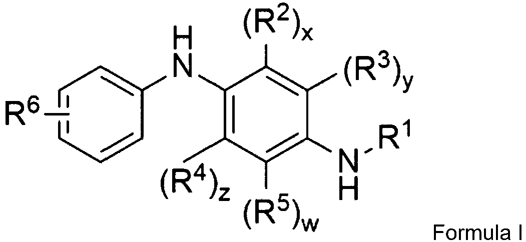
in the Formula I, R¹ is selected from C₁-C₁₈ chain hydrocarbyl, C₃-C₁₈ alicyclic hydrocarbyl, or C₆-C₁₈ aryl, R², R³, R⁴, and R⁵ are each independently selected from the C₁-C₁₈ chain hydrocarbyl, R² and R³ or R⁴ and R⁵ are able to respectively or simultaneously constitute an alicyclic ring, and R⁶ is selected from H, the C₁-C₁₈ chain hydrocarbyl, the C₃-C₁₈ alicyclic hydrocarbyl, or the C₆-C₁₈ aryl, wherein x=0 or 1, y=0 or 1, z=0 or 1, w=0 or 1, at least one of x and w is 1, and at least one of y and z is 1.

6. The preparation method according to claim 2, wherein a weight ratio of the stearic acid to the anti-aging agent is 1:1-1:1.25; a weight ratio of the vulcanizing system to the anti-aging agent is 0.8:1-1.15:1; and/or
in the vulcanizing auxiliary agent, a content of the rubber is 50-95wt%.

7. The preparation method according to claim 2, wherein S2 comprises removing the solvent in the pre-reaction mixture, and then mixing the pre-reaction mixture with the rubber to obtain a masterbatch-type vulcanizing auxiliary agent; or
S2 comprises mixing the pre-reaction mixture containing the solvent with the rubber, and then removing the solvent to obtain the masterbatch-type vulcanizing auxiliary agent.

8. The preparation method according to claim 3, wherein 10-20 *phr* of the zinc oxide, 5-15 *phr* of the stearic acid, 5-15 *phr* of the anti-aging agent, and 5-15 *phr* of the vulcanizing system agent are added during pre-reaction.

9. The preparation method according to claim 8, wherein the vulcanizing auxiliary agent further comprises 50-150 *phr* of the rubber; a method for preparing the vulcanizing auxiliary agent containing the rubber further comprises first mixing or second mixing; the first mixing comprises: mixing filtrate obtained after zinc removal through filtration with the rubber, and then performing solvent removal; and the second mixing comprises: removing the solvent in the filtrate obtained after zinc removal through filtration, and then mixing the filtrate with the rubber.

10. The preparation method according to claim 7 or 9, wherein the rubber comprises any one or more of a natural polymer or a synthetic polymer; preferably, the rubber is selected from any one or more of natural rubber, styrene butadiene rubber, isoprene rubber, natural eucommia ulmoides gum, polyisoprene rubber, butadiene rubber, halogenated butyl rubber, and ethylene-propylene-diene monomer rubber; preferably, a molecular weight of the rubber is 1000 to 40 million, further preferably 5000 to 30 million, and more preferably 10000-8 million; and
preferably, the rubber comprises diene rubber having a structure shown in Formula II: 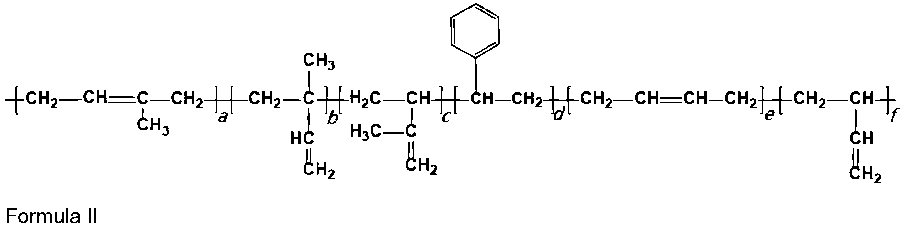
wherein a, b, c, d, e, and f are each independent integers greater than or equal to 0, and a, b, c, d, e, and f are not 0 at the same time.

11. A vulcanizing auxiliary agent, prepared by the preparation method according to any one of claims 1 to 10.

12. A rubber composition, comprising an elastomer, a filler, and a zinc-free vulcanizing auxiliary agent, wherein the zinc-free vulcanizing auxiliary agent is the vulcanizing auxiliary agent according to claim 11.

13. The rubber composition according to claim 12, wherein the filler comprises any one or more of a carbon-based filler, a silicon-based filler, a carbon-silicon biphasic filler, and clay; preferably, a specific surface area of the filler is 10-500 m²/g, further preferably 30-300 m²/g, and more preferably 50-300 m²/g;
preferably, the rubber composition further comprises other auxiliary agents, and other auxiliary agents comprise any one or more of resin, operating oil, a vulcanizing agent, and a silane coupling agent;
preferably, the rubber composition comprises, by weight, 100 *phr* of the elastomer, 20 *phr-170 phr of* the filler, 10-50 *phr of* the zinc-free vulcanizing auxiliary agent, and other auxiliary agents; or the rubber composition comprises 0-130 parts of the elastomer, 25-35 parts of the zinc-free vulcanizing auxiliary agent, 20-170 parts of the filler, and 1-5 parts of other auxiliary agents; and more preferably, the rubber composition comprises 30-100 parts of the elastomer, 26-31 parts of the zinc-free vulcanizing auxiliary agent, 50-130 parts of the filler, and 1.4-4.5 parts of other auxiliary agents.

14. A rubber product, prepared by the rubber composition according to claim 12 or 13.

15. A tire, comprising the rubber product according to claim 14.
